# EUROPÄISCHE PATENTSCHRIFT

(11) **EP 2 801 454 B1**
(45) Veröffentlichungstag und Bekanntmachung des Hinweises auf die Patenterteilung: **31.05.2017**
(21) Anmeldenummer: 14164446.8
(22) Anmeldetag: 11.04.2014
(51) Int. Cl.: B25J 19/00, F16L 39/04, F15B 13/07, F16K 11/074

(54) **Drehdurchführung und Verfahren hierzu**
Rotary feedthrough and method for the same
Passage rotatif et procédé correspondant

(30) Priorität: 19.04.2013 DE 102013207176
(43) Veröffentlichungstag der Anmeldung: 12.11.2014
(73) Patentinhaber: Schunk GmbH & Co. KG Spann- und Greiftechnik, 74348 Lauffen am Neckar (DE)
(72) Erfinder: Geith Georg, 81418 Murnau (DE); Fürst Martin, 81418 Murnau (DE)
(74) Vertreter: DREISS Patentanwälte PartG mbB

(56) Entgegenhaltungen:
- DE-A1- 2 532 136
- DE-A1- 4 216 522
- DE-B4- 10 119 356
- "Sammelgreifer RVK - Hochproduktiv bei Collect & Place Anwendungen", Neuheiten, 4. Oktober 2013 (2013-10-04), Seiten 58-59, XP55154494, Gefunden im Internet: URL:http://www.schunk.com/schunk_files/att achments/rvk__highlights__2013-10__de.pdf [gefunden am 2014-11-24]

## Beschreibung

Die Erfindung betrifft eine Drehdurchführung mit einem Grundteil und einem gegenüber dem Grundteil drehbar angeordneten Drehteil, mit einem am Grundteil vorgesehenen pneumatischen Anschlusspaar umfassend einen Arbeitsanschluss und einen Entlüftungsanschluss, und mit mehreren am Drehteil vorgesehen, jeweils einen Anschluss A und einen Anschluss B umfassenden Abgreifpaaren.

Derartige Drehdurchführungen sind beispielsweise aus der DE 101 19 356 B4 vorbekannt. An den Abgreifpaaren können beispielsweise Manipulatoren, wie beispielsweise Greifmittel, Spannmittel oder auch Bearbeitungswerkzeuge angeordnet sein. Bei dem vorbekannten Stand der Technik ist für jeden Manipulator ein eigenes Abgreifpaar vorgesehen, wobei jedes Abgreifpaar mit einem ihm zugehörigen, eigenen grundteilseitigen Anschlusspaar, also einem ihm zugeordneten Arbeitsanschluss und einem ihm zugeordneten Entlüftungsanschluss, verbunden ist.

Der vorliegenden Erfindung liegt die Aufgabe zu Grunde, eine Drehdurchführung bereitzustellen, mit der mehrere Manipulatoren versorgt werden können, wobei insbesondere einer der mehreren Manipulatoren unabhängig von den anderen Manipulatoren betätigbar ist. Die Drehdurchführung soll dabei einen möglichst einfachen Aufbau aufweisen, dennoch funktionssicher arbeiten.

Diese Aufgabe wird mit einer Drehdurchführung mit den Merkmalen des Anspruchs 1 gelöst. Dabei ist vorgesehen, dass am Grundteil eine von einer Deaktivierungsstellung in eine Aktivierungsstellung schaltbare Ventilanordnung vorgesehen ist, wobei in der Deaktivierungsstellung der Ventilanordnung die jeweiligen Anschlüsse A mit dem Arbeitsanschluss beziehungsweise dem Entlüftungsanschluss und die jeweiligen Anschlüsse B mit dem Entlüftungsanschluss beziehungsweise Arbeitsanschluss verbunden sind. Ferner ist vorgesehen, dass das Drehteil gegenüber dem Grundteil so verdreht werden kann, dass ein Abgreifpaar eine Aktivierungslage einnimmt, wobei in der Aktivierungsstellung der Ventilordnung bei dem Abgreifpaar, das die Aktivierungslage einnimmt, die Anschlussbelegung der Anschlüsse A und B invertiert ist.

Dadurch kann vorgesehen werden, dass über lediglich ein Anschlusspaar, das den Arbeitsanschluss und den Entlüftungsanschluss vorsieht, mehrere Abgreifpaare in der Deaktivierungsstellung der Ventilanordnung synchron mit Druckluft beaufschlagt werden können. An den Abgreifpaaren angeordnete Manipulatoren bewegen sich dann synchron.

Allerdings kann das Abgreifpaar, das die Aktivierungslage einnimmt, bei Ansteuern der Ventilanordnung in die Aktivierungsstellung durch Invertieren der Anschlussbelegung der Anschlüsse A und B entgegen der anderen Abgreifpaare mit Druckluft beaufschlagt werden. Ein an diesem sich in der Aktivierungslage befindlichen Manipulator kann dann entgegen den anderen Manipulatoren betätigt werden.

Die Ventilanordnung als solche kann dabei beispielsweise pneumatisch oder elektrisch angesteuert werden. Vorzugsweise findet ein 2/4-Wege-Ventil Verwendung.

Handelt es sich beispielsweise bei sämtliche Manipulatoren um Greifvorrichtungen, so kann die Greifvorrichtung, die sich in der Aktivierungslage befindet, bei aktivierter Ventilanordnung einen Greifvorgang durchführen, während die anderen Greifvorrichtungen beispielsweise sich in der Öffnungsstellung befinden.

Insgesamt kann dadurch mit vergleichsweise wenig Aufwand mittels der Drehdurchführung revolverkopfartig jeweils ein Manipulator, der sich an dem Abgreifpaar, das sich in der Aktivierungslage befindet, durch Ansteuern der Ventilanordnung in die Aktivierungsstellung unabhängig von den anderen Manipulatoren betätigt werden.

Dabei ist beachtlich, dass am Arbeitsanschluss insbesondere ein Druckspeicher angeordnet und der Entlüftungsanschluss drucklos geschalten sein kann. Allerdings ist auch eine umgekehrte Belegung nicht ausgeschlossen.

Vorteilhafterweise ist zwischen dem Grundteil und dem Drehteil ein erstes, mit dem Arbeitsanschluss verbundenes Druckreservoir und ein zweites, mit dem Entlüftungsanschluss verbundenes Entlüftungsreservoir vorgesehen. Die beiden Reservoire sind nicht miteinander verbunden, so dass im Druckreservoir stets der Druck herrscht, der über den Arbeitsanschluss vorgegeben ist und dass im Entlüftungsreservoir der Druck vorherrscht, der über den Entlüftungsanschluss vorgegeben ist. In der Deaktivierungsstellung der Ventilanordnung sind sämtliche Anschlüsse A mit dem Druckreservoir beziehungsweise dem Entlüftungsreservoir und sämtliche Anschlüsse B mit dem Entlüftungsreservoir beziehungsweise dem Druckreservoir verbunden. Bei allen Anschlüssen A liegt dann der Druck des Druckreservoirs beziehungsweise des Entlüftungsreservoirs an. Bei allen Anschlüssen B liegt der Druck des Entlüftungsreservoirs beziehungsweise des Druckreservoirs an. Die beiden Reservoire können dabei insbesondere ringförmig umlaufend um das Drehteil angeordnet sein. Vorteilhafterweise liegen dabei die Reservoire axial übereinander.

Dabei ist vorteilhaft, wenn in der Aktivierungsstellung der Ventilanordnung die Anschlüsse A und B des sich in der Aktivierungslage befindlichen Abgreifpaares vom Druckreservoir und vom Entlüftungsreservoir, beziehungsweise vom Entlüftungsreservoir und vom Druckreservoir, abgetrennt und mit dem Entlüftungsreservoir und dem Druckreservoir, beziehungsweise dem Druckreservoir und dem Entlüftungsreservoir, verbunden sind. Dadurch kann ein Manipulator, der an dem Abgreifpaar, welches sich in der Aktivierungslage befindet, unabhängig von den anderen Manipulatoren, die sich nicht in der Aktivierungslage befinden, betätigt werden.

Vorteilhafterweise ist ferner denkbar, dass die Ventilanordnung zwei radial zur Drehachse des Drehteils verlagerbare Ventilstößel umfasst, die sich in der Deaktivierungsstellung im Grundteil befinden und in der Aktivierungsstellung wenigstens abschnittsweise in drehteilseitige Stößelaufnahmen eingreifen. Durch das Eingreifen der Ventilstößel in die Stößelaufnahmen kann zum einen eine Verdrehsicherung des Drehteils gegenüber dem Grundteil gewährleistet werden. Zudem kann über das Eingreifen der Stößel in die Stößelaufnahmen ein Invertieren der Anschlüsse A und B des sich in der Aktivierungslage befindlichen Abgreifpaares auf einfache Art und Weise realisiert werden.

Dabei kann vorgesehen sein, dass der erste Ventilstößel eine erste Steuerkante und eine zweite Steuerkante aufweist, wobei beim Verlagern des ersten Ventilstößels in die Aktivierungsstellung die erste Steuerkante den Anschluss A vom Druckreservoir oder Entlüftungsreservoir abtrennt und die zweite Steuerkante den Anschluss A mit dem Entlüftungsreservoir beziehungsweise Druckreservoir verbindet. Hierdurch kann auf vergleichsweise einfache Art und Weise eine Invertierung des Anschlusses A erfolgen.

Entsprechend ist denkbar, dass der zweite Ventilstößel eine erste Steuerkante und eine zweite Steuerkante aufweist, wobei beim Verlagern des zweiten Ventilstößels in die Aktivierungsstellung die erste Steuerkante den Anschluss B vom Entlüftungsreservoir beziehungsweise Druckreservoir abtrennt und die zweite Steuerkante den Anschluss B mit dem Druckreservoir oder Entlüftungsreservoir verbindet. Dadurch kann auf einfache Art und Weise eine Invertierung des Anschlusses B erfolgen.

Weiterhin ist vorteilhaft, wenn der erste und/oder der zweite Ventilstößel einen Hülsenabschnitt mit einem offenen freien Ende und eine mit dem Hülsenabschnitt verbundene am radial äußeren Bereich vorgesehene Radialöffnung aufweisen, wobei die erste Steuerkante am freien Ende des Hülsenabschnitts vorgesehen ist und die zweite Steuerkante die Radialöffnung begrenzt. Durch Verlagern des jeweiligen Ventilstößels, oder der beiden Ventilstößel, in die Aktivierungsstellung kann damit eine Invertierung des jeweiligen Anschlusses A und/oder B erreicht werden.

Zur synchronen Bewegung beider Ventilstößel ist denkbar, dass die Ventilstößel an einem Ventilkolben angeordnet sind, der wenigstens einen druckbeaufschlagbaren Druckraum begrenzt. Vorzugsweise kann der Ventilkolben auch zwei Druckräume begrenzen, so dass durch jeweilige Druckbeaufschlagung des einen oder anderen Druckraums die Bewegung des Ventilkolbens steuerbar ist.

Anstelle eines Druckbeaufschlagens des Ventilkolbens ist außerdem denkbar, dass der Ventilkolben beispielsweise über eine elektromotorisch angetriebene Spindel bewegt werden kann.

Für den Fall, dass der Ventilkolben über Druckbeaufschlagung verlagerbar ist, ist denkbar, dass das Grundteil ein Ansteueranschlusspaar zur pneumatischen Ansteuerung der Ventilanordnung aufweist. Am Grundteil sind dann zwei pneumatische Anschlusspaare, zum einen das Anschlusspaar für den Arbeitsanschluss und den Entlüftungsanschluss, und zum anderen das Ansteueranschlusspaar für den Ventilkolben vorgesehen.

Ferner ist vorteilhaft, wenn das Drehteil zwei, vier, sechs, acht, zehn oder zwölf Abgreifpaare aufweist, die insbesondere wie oben beschrieben, mit dem jeweiligen Druckreservoir verbunden sind.

Die eingangs genannte Aufgabe wird auch gelöst durch ein Verfahren, insbesondere zum Betreiben einer erfindungsgemäßen Drehdurchführung, und/oder zum pneumatischen Aktivieren eines von mehreren an einem Drehteil vorgesehenen und dort an Abgreifpaaren angeschlossenen Manipulators. Das Drehteil ist dabei an einem Grundteil drehbar angeordnet, wobei die Abgreifpaare, an denen die Manipulatoren angeschlossen sind, jeweils einen Anschluss A und einen Anschluss B umfassen und die Anschlüsse A und B mit einem grundteilseitigen Entlüftungsanschluss beziehungsweise Arbeitsanschluss verbindbar sind, wobei das Verfahren folgende Schritte umfasst:
- Verbinden der jeweiligen Anschlüsse A mit dem Arbeitsanschluss beziehungsweise Entlüftungsanschluss und der jeweiligen Anschlüsse B mit dem Entlüftungsanschluss beziehungsweise Arbeitsanschluss,
- Verdrehen des Drehteils gegenüber dem Grundteil derart, dass das Anschlusspaar des zu aktivierenden Manipulators eine Aktivierungslage einnimmt, und
- Ansteuern einer am Grundteil vorgesehenen Ventilanordnung derart, dass bei dem Abgreifpaar des Manipulators, der die Aktivierungslage einnimmt, die Anschlussbelegung der Anschlüsse A und B invertiert wird.

Durch ein derartiges Verfahren kann folglich ein Manipulator, der neben weiteren Manipulatoren an dem Drehteil angeordnet ist, durch Betätigen der Ventilanordnung unabhängig von den anderen Manipulatoren betätigt werden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
Figur 1 eine perspektivische Ansicht einer erfindungsgemäßen Drehdurchführung;
Figur 2 die Unteransicht der Drehdurchführung gemäß Figur 1 ;
Figur 3 eine an einer Schwenkeinheit und einer Manipulatoreneinheit verbauten Drehdurchführung gemäß Figur 1 ;
Figur 4 einen Längsschnitt durch die Drehdurchführung nach Figur 1 in der Deaktivierungsstellung;
Figur 5 einen Schnitt durch die Drehdurchführung gemäß Figur 4 entlang der Linie V;
Figur 6 einen Schnitt durch die Drehdurchführung gemäß Figur 4 entlang der Linie VI;
Figur 7 ein Längsschnitt durch die Drehdurchführung gemäß Figur 1 in der Aktivierungsstellung;
Figur 8 einen Schnitt durch die Drehdurchführung gemäß Figur 7 entlang der Linie VIII;
Figur 9 einen Schnitt durch Figur 7 entlang der Linie IX;
Figur 10 eine schematische Darstellung der Funktionsweise der Drehdurchführung gemäß Figur 1.

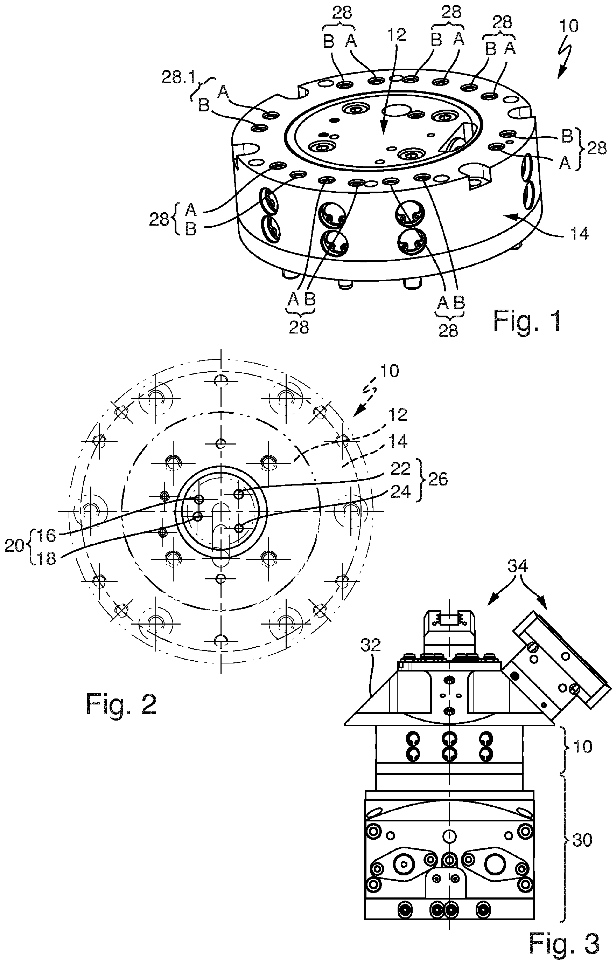

In den Figuren 1 bis 9 ist eine erfindungsgemäße Drehdurchführung 10 gezeigt, die ein Grundteil 12 und ein gegenüber dem Grundteil 12 drehbar angeordnetes Drehteil 14 aufweist. Das Drehteil 14 umgibt dabei ringartig das Grundteil 12.

An der in Figur 2 dargestellten Unterseite der Drehdurchführung 10 sind am Grundteil 12 ein Arbeitsanschluss 16 und ein Entlüftungsanschluss 18 für Pneumatikleitungen vorgesehen. Der Arbeitsanschluss 16 und der Entlüftungsanschluss 18 bilden dabei ein Anschlusspaar 20, zur Versorgung von am Drehteil 14 anordenbare Manipulatoren, wie insbesondere Greifer. An der Unterseite des Grundteils sind zwei weitere Anschlüsse vorgesehen, nämlich ein erster Ansteueranschluss 22 und ein zweiter Ansteueranschluss 24, die zur Versorgung einer im Grundteil 12 vorgesehenen Ventilanordnung 36, die weiter unten beschrieben wird, dienen. Die beiden Anschlüsse 22 und 24 bilden dabei ein Ansteueranschlusspaar 26.

An der Oberseite des Drehteils 14 sind, wie in Figur 1 erkennbar, Abgreifpaare 28 vorgesehen, die jeweils einen Anschluss A und einen Anschluss B umfassen. Insgesamt sind acht Abgreifpaare 28 am Drehteil vorgesehen. Wie weiter unten erläutert wird, ist der Arbeitsanschluss 16 und der Entlüftungsanschluss 18 mit den Anschlüssen A beziehungsweise Anschlüssen B verbunden.

Figur 3 zeigt eine Seitenansicht eines Handhabungsmoduls, das einen Drehantrieb 30 aufweist, auf welchem die Drehdurchführung 10 gemäß Figur 1 angeordnet ist. Über den Drehantrieb 30 ist das Drehteil 14 in definierte Drehstellungen verdrehbar. Auf der dem Drehantrieb 30 abgewandten Seite der Drehdurchführung 10 sind an einem Adapterteil 32 Manipulatoren in Form von Greifern 34 angeordnet. Über den Drehantrieb 30 sind letztlich die Greifer 34 an definierte Greifpositionen verdrehbar. Über die Drehdurchführung 10 können die Greifer 34 mit Druckluft zu deren Betätigung beaufschlagt werden.

Auf Grund der Ausbildung der Drehdurchführung 10 ist es möglich, einen Greifer 34, der sich in einer Aktivierungslage befindet, unabhängig von den anderen Greifern 34 anzusteuern und damit zu betätigen.

Die Drehdurchführung 10 ist dabei, wie im Nachfolgenden näher beschrieben, wie folgt aufgebaut:

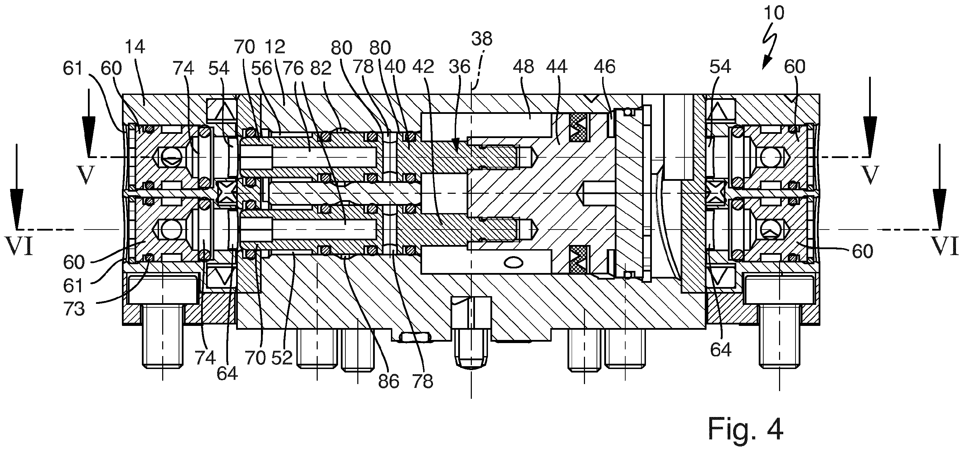

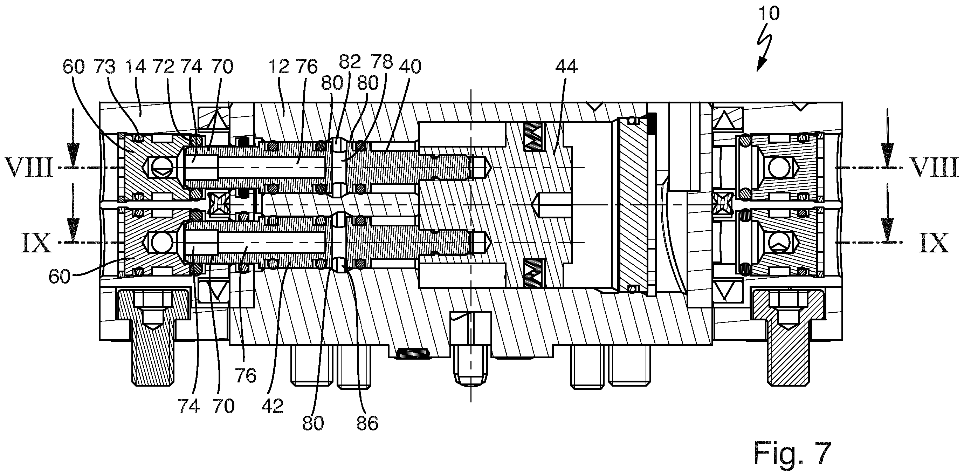

Wie aus Figur 4 deutlich zu erkennen ist, ist im Grundteil 12 die Ventilanordnung 36 vorgesehen. Die Ventilanordnung 36 ist von einer Deaktivierungsstellung, die in den Figuren 4 bis 6 gezeigt ist, in eine Aktivierungsstellung, die in den Figuren 7 bis 9 gezeigt ist, schaltbar.

Die Ventilanordnung 36 weist dabei zwei radial zu einer in Figur 4 gezeigten Drehachse 38 des Drehteils 12 verlagerbare Ventilstößel 40 und 42 auf. Die beiden Ventilstößel 40, 42 sind einerends an einem Ventilkolben 44 angeordnet, der zwei Druckräume 46 und 48 begrenzt. Der eine Druckraum 46 ist dabei mit dem einen Ansteueranschluss 22, der in Figur 2 gezeigt ist, verbunden. Der andere Druckraum 48 ist dabei mit dem anderen Ansteueranschluss 24, der ebenfalls in Figur 2 gezeigt ist, verbunden. Je nach Druckbeaufschlagung der Druckräume 46 und 48 kann folglich der Ventilkolben 44 aus der in Figur 4 gezeigten Deaktivierungsstellung in die in Figur 7 gezeigte Aktivierungsstellung verlagert werden. Auf Grund der pneumatischen Verlagerung des Ventilkolbens 44 handelt es sich bei der Ventilanordnung 36 um eine pneumatisch betätigbare Ventilanordnung 36. Gemäß der Erfindung wäre allerdings auch denkbar, den Ventilkolben 44 als Stellglied auszubilden, der beispielsweise elektromotorisch in zur Drehachse 38 radialer Richtung verlagert wird.

Wie aus Figur 4 deutlich wird, befinden sich die beiden Ventilstößel 40, 42 in der Deaktivierungsstellung innerhalb des Grundteils 12. Die Ventilstößel 40, 42 sind dabei in sich in radialer Richtung erstreckenden Stößelausnehmungen 50 und 52 verlagerbar angeordnet.

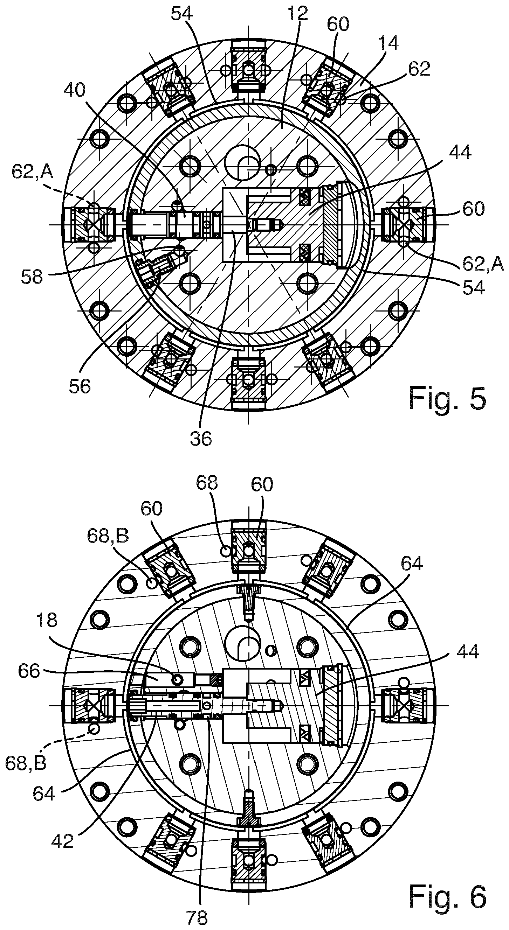

Die Figuren 5 und 6 zeigen nun Querschnitte entlang der Linien V und VI in Figur 4. Aus Figur 5 wird deutlich, dass zwischen dem Grundteil 12 und dem Drehteil 14 in der gezeigten Schnittebene ein Ringraum 54 vorgesehen ist, der über einen radial verlaufenden Leitungsabschnitt 56 und einer sich im Wesentlichen axial verlaufenden Bohrung 58 mit dem an der Unterseite des Grundteils vorgesehenen Arbeitsanschluss 16 pneumatisch verbunden ist. Der Ringraum 54 bildet folglich im Betrieb der Drehdurchführung 10 ein Druckreservoir, in dem Arbeitsdruck herrscht.

Der Ringraum 54 ist zudem, wie ebenfalls aus Figur 5 erkennbar ist, über sich in radialer Richtung erstreckende stopfenartige Hülsen 60, die mit Ringen 61 gesichert sind, und entsprechend verlaufenden Bohrungen 62 mit den Anschlüssen A der Abgreifpaare 28 verbunden. Insofern steht im Betrieb der Drehdurchführung an sämtlichen Anschlüssen A, sofern die Ventilanordnung in der in Figur 4 bis 6 gezeigten Deaktivierungsstellung ist, der Arbeitsdruck des Ringraums 54 an.

Aus dem Schnitt gemäß Figur 6 wird deutlich, dass axial unterhalb des Ringraums 54 ein weiterer Ringraum 64 vorgesehen ist, der als Entlüftungsreservoir dient. Dieser Ringraum 64 ist über eine sich parallel zu den Ventilstößeln 40, 42 erstreckende Bohrung 66 mit den in Figur 2 gezeigten Entlüftungsanschluss 18 pneumatisch verbunden. Insofern herrscht im Betrieb der Drehdurchführung 10 im Ringraum 64 der am Entlüftunganschluss 18 anliegende Druck.

Entsprechend dem Aufbau der in Figur 5 gezeigten Ebene, sind auch in der in Figur 6 gezeigten Ebene in radialer Richtung verlaufend angeordnete Hülsen 60 vorgesehen. Über diese Hülsen 60, und über sich in axialer Richtung erstreckende Bohrungen 68 sind sämtliche Anschlüsse B, sofern sich die Ventilanordnung 36 in der Deaktivierungsstellung befindet, mit dem Ringraum 64 verbunden. Folglich herrscht an den Anschlüssen B der am Entlüftungsanschluss 18 anliegende Druck.

Durch Verlagern der Ventilanordnung 36 aus der in den Figuren 4 bis 6 gezeigten Deaktivierungsstellung in die in den Figuren 7 bis 9 gezeigte Aktivierungsstellung ist es möglich, die Anschlussbelegung eines Abgreifpaares zu invertieren. Invertiert werden kann das Abgreifpaar, welches sich in einer Aktivierungslage befindet. Bei der in den Figuren dargestellten Ausführungsformen befindet sich dasjenige Abgreifpaar in der Aktivierungslage, dessen zugeordnete Hülsen 60 in radialer Verlängerung der Ventilstößel 40, 42 angeordnet sind. Bei dem in den Figuren dargestellten Ausführungsbeispiel befindet sich das Abgreifpaar 28.1 in der Aktivierungslage, das heißt die Anschlüsse A und B dieses Abgreifpaares können bei Betätigen der Ventilanordnung 36, das heißt bei Verlagern der Ventilstößel 40, 42 in die Aktivierungsstellung, invertiert werden. Dadurch kann ein über dieses Abgreifpaar 28.1 betätigbarer Manipulator, gemäß der Figur 3 ein Greifer, unabhängig von den anderen Manipulatoren betätigt werden.

Wird folglich der Ventilkolben 44 durch Druckbeaufschlagung des Druckraums 46 aus der in Figur 4 gezeigten Deaktivierungsstellung in die in Figur 7 gezeigte Aktivierungsstellung bewegt, passiert folgendes:

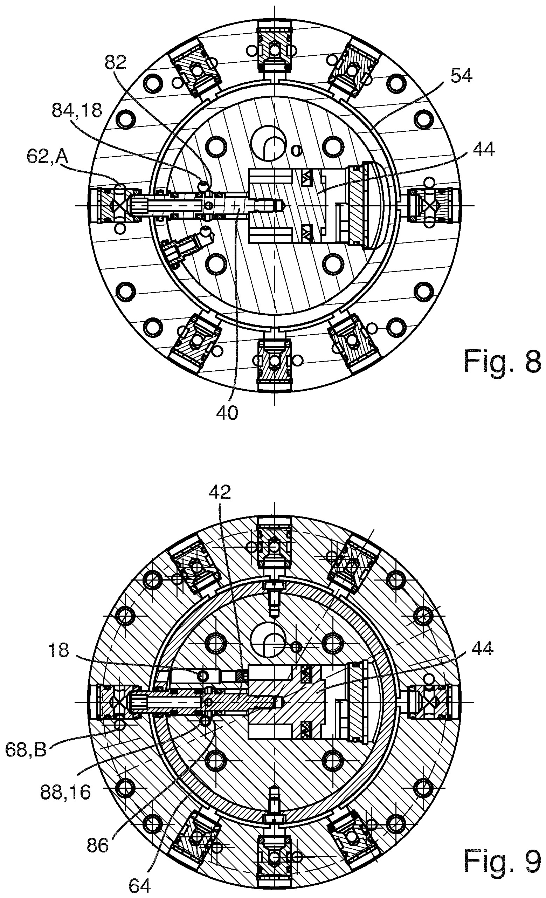

Das freie Ende 70 des Ventilstößels 40 trennt die ihm zugeordnete Hülse 60 vom Ringraum 54 ab. Das freie Ende 70 des Ventilstößels 40 greift dazu, wie in Figur 7 deutlich zu erkennen ist, in eine drehteilseitige, von der Hülse 60 gebildete Stößelaufnahme 74 ein. Das freie Ende 70 des Ventilstößels 40 bildet dabei eine Steuerkante, die zusammen mit einer in Figur 7 das freie Ende 70 des Ventilstößels 40 umschließenden Ringdichtung 72 den Ringraum 54 dicht abschließt. Radial außenliegend ist die Hülse 60 mittels einer Ringdichtung 73 gegen das Drehteil 14 abgedichtet. Der der Hülse 60 zugewandte Bereich des Ventilstößels 40 weist dabei einen Hülsenabschnitt 76 auf, der im Bereich des freien Endes 70 beziehungsweise der Stirnseite des Ventilstößels 40, offen ist. Ferner ist im radial äußeren Bereich des Ventilstößels 40 eine Radialöffnung 78 vorgesehen, die mit dem hohl ausgebildeten Hülsenabschnitt 76 pneumatisch verbunden ist. Der die Radialöffnung 78 umgebende Bereich des Ventilstößels 40 bildet eine Steuerkante 80, die in der Aktivierungsstellung einen um den Ventilstößel 40 umlaufenden Druckraum 82 mit der Radialöffnung 78 und damit mit dem inneren des Hülsenabschnitts 76 verbindet. Der Druckraum 82 ist dabei, wie aus Figur 8 deutlich wird, über eine Bohrung 84 mit dem darunter liegenden Entlüftungsanschluss 18 verbunden. Aus Figur 8 wird zudem deutlich, dass das Innere des Hülsenabschnitts 76 in der Aktivierungsstellung über die Bohrung 62 mit dem Anschluss A verbunden ist.

Beim Verlagern des Ventilstößels 40 in die Aktivierungsstellung wird folglich zum einen der Anschluss A des sich in der Aktivierungslage befindlichen Abgreifpaares 28.1 durch Einfahren des freien Endes 70 des Ventilstößels 40 in die Stößelaufnahme 74 bzw. in den O-Ring 72 vom druckbeaufschlagten Ringraum 54 abgetrennt und zum anderen über den Hülsenabschnitt 76 die Radialöffnung 78 und den Druckraum 82 mit dem Entlüftungsanschluss 18 verbunden. Insofern wird der Anschluss A des sich in Aktivierungslage befindlichen Abgreifpaares 28.1 invertiert.

Entsprechendes gilt für den Anschluss B. Der Ventilstößel 42 entspricht im Aufbau dem Ventilstößel 40. Ebenso entspricht die dem Ventilstößel 42 zugeordnete Hülse 60 der dem Ventilstößel 40 zugeordneten Hülse. Auch ein dem Druckraum 82 entsprechender Druckraum 86 umgibt den Ventilstößel 42.

Beim Verlagern des Ventilkolbens 42 in die Aktivierungsstellung trennt folglich das freie Ende 70 des Ventilstößels 42 den Anschluss B vom Ringraum 64 ab. Zeitgleich wird über die Steuerkante 80 des Ventilstößels 42 der innere Bereich des Hülsenabschnitts mit dem Druckraum 86 pneumatisch verbunden. Wie aus dem Schnitt gemäß Figur 9 deutlich wird, ist der Druckraum 86 über eine axiale Bohrung 88 mit dem an der Unterseite des Grundteils 12 vorgesehenen Arbeitsanschluss 16 verbunden. Dadurch wird in der Aktivierungsstellung letztlich die Bohrung 68, beziehungsweise der Anschluss B des sich in der Aktivierungslage befindlichen Abgreifpaares 28.1, von dem Entlüftungsanschluss 18 abgetrennt und mit dem Arbeitsanschluss 16 verbunden, also invertiert.

In der Deaktivierungsstellung der Ventilanordnung können beispielsweise sämtliche, mit den Abgreifpaaren 28 verbundene Greifvorrichtungen 36 synchron bewegt werden, und insbesondere eine Öffnungsstellung einnehmen. Durch Verdrehen des Drehteils 14 gegenüber dem Grundteil 12 kann ein ausgewähltes Abgreifpaar, zusammen mit an diesem angeschlossenen Manipulator, in eine Aktivierungslage verdreht werden. Durch Betätigen der Ventilanordnung 36 kann für dieses sich in der Aktivierungslage befindliche Abgreifpaar 28.1 eine Invertierung der Belegung der Anschlüsse A und B erfolgen, wodurch der diesem Abgreifpaar 28.1 zugeordnete Manipulator 36 unabhängig von den anderen Manipulatoren betätigt, insbesondere geschlossen, werden kann.

Dabei ist ebenfalls grundsätzlich denkbar, dass über eine externe Ventilanordnung die Belegung des Anschlusspaares, also des Arbeitsanschlusses 16 und des Entlüftungsanschlusses 18 invertiert wird. Dadurch kann, beispielsweise in einem Notlauf, erreicht werden, dass in den Deaktivierungsposition der Ventilanordnung 36 sämtliche Manipulatoren in ihre umgekehrte Position betätigt werden, insbesondere geschlossen oder geöffnet werden.

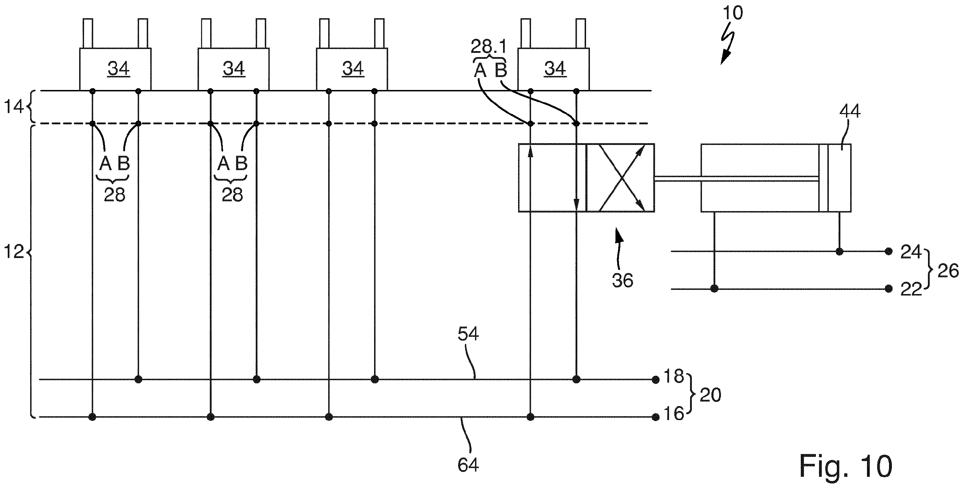

Figur 10 veranschaulicht nochmals schematisch die erfindungsgemäße Drehdurchführung 10. Gezeigt ist ein Anschlusspaar 20 mit dem Arbeitsanschluss 16 und dem Entlüftungsanschluss 18. Über jeweils eine gemeinsame Leitung 54 beziehungsweise 64 sind sämtliche Anschlüsse A beziehungsweise B mit entweder dem Arbeitsanschluss 16 oder dem Entlüftungsanschluss 18 verbunden. Dabei ist durch Verdrehen des Drehteils gegenüber dem Grundteil ein auswählbares Abgreifpaar 28 in eine Aktivierungslage bringbar, in welcher durch Ansteuern der Ventilanordnung 36 in eine Aktivierungsposition die Anschlussbelegung dieses Abgreifpaares 28.1 unabhängig von den anderen Abgreifpaaren 28 invertiert wird.

## Patentansprüche

1. Drehdurchführung (10) mit einem Grundteil (12) und einem gegenüber dem Grundteil (12) drehbar angeordneten Drehteil (14), mit einem am Grundteil (12) vorgesehenen Anschlusspaar (20) umfassend einen Arbeitsanschluss (16) und einen Entlüftungsanschluss (18), und
mit mehreren am Drehteil (12) vorgesehenen, jeweils einen Anschluss A und einen Anschluss B umfassenden Abgreifpaaren (28), **dadurch gekennzeichnet, dass** im oder am Grundteil (12) eine von einer Deaktivierungsstellung in eine Aktivierungsstellung schaltbarbare Ventilanordnung (36) vorgesehen ist, wobei in der Deaktivierungsstellung der Ventilanordnung (36) die jeweiligen Anschlüsse A mit dem Arbeitsanschluss (16) beziehungsweise Entlüftungsanschluss (18) und die jeweiligen Anschlüsse B mit dem Entlüftungsanschluss (18) beziehungsweise dem Arbeitsanschluss (16) verbunden sind, und dass das Drehteil (14) gegenüber dem Grundteil (12) so verdreht werden kann, dass ein Abgreifpaar (28.1) eine Aktivierungslage einnimmt, wobei in der Aktivierungsstellung der Ventilanordnung (36) bei dem Abgreifpaar (28.1), das die Aktivierungslage einnimmt, die Anschlussbelegung der Anschlüsse A und B invertiert ist.

2. Drehdurchführung (10) nach Anspruch 1, **dadurch gekennzeichnet, dass** zwischen dem Grundteil (12) und Drehteil (14) ein erstes, mit dem Arbeitsanschluss (16) verbundenes Druckreservoir (54), und ein zweites, mit dem Entlüftungsanschluss (18) verbundenes Entlüftungsreservoir (64) vorgesehen ist, wobei in der Deaktivierungsstellung der Ventilanordnung (36) die Anschlüsse A mit dem Druckreservoir (54) beziehungsweise dem Entlüftungsreservoir (64) und die Anschlüsse B mit dem Entlüftungsreservoir (64) beziehungsweise dem Druckreservoir (54) verbunden sind.

3. Drehdurchführung (10) nach Anspruch 2, **dadurch gekennzeichnet, dass** in der Aktivierungsstellung der Ventilanordnung (36) die Anschüsse A und B des sich in der Aktivierungslage befindlichen Abgreifpaares (28.1) von dem Druckreservoir (54) und Entlüftungsreservoir (64) beziehungsweise Entlüftungsreservoir (64) und Druckreservoir (54), abgetrennt und mit dem Entlüftungsreservoir (64) und Druckreservoir (54), beziehungsweise Druckreservoir (54) und Entlüftungsreservoir (64) verbunden sind.

4. Drehdurchführung (10) nach Anspruch 1, 2 oder 3, **dadurch gekennzeichnet, dass** die Ventilanordnung (36) zwei radial zur Drehachse (38) des Drehteils (14) verlagerbare Ventilstößel (40, 42) umfasst, die sich in der Deaktivierungsstellung im Grundteil (12) befinden und in der Aktivierungsstellung wenigstens abschnittsweise in drehteilseitige Stößelaufnahmen (74) und/oder in eine an der Stößelaufnahme (74) vorgesehene Ringdichtung (72) eingreifen.

5. Drehdurchführung (10) nach Anspruch 4, **dadurch gekennzeichnet, dass** der erste Ventilstößel (40) eine erste Steuerkante (70) und eine zweite Steuerkante (80) aufweist, wobei beim Verlagern des ersten Ventilstößels (40) in die Aktivierungsstellung die erste Steuerkante (70) den Anschluss A vom Druckreservoir (54) beziehungsweise Entlüftungsreservoir (64) abtrennt, und
die zweite Steuerkante den Anschluss A mit dem Entlüftungsreservoir (64) beziehungsweise Druckreservoir (54) verbindet.

6. Drehdurchführung (10) nach Anspruch 4 oder 5, **dadurch gekennzeichnet, dass** der zweite Ventilstößel (42) eine erste Steuerkante (70) und eine zweite Steuerkante (80) aufweist, wobei beim Verlagern des zweiten Ventilstößels (42) in die Aktivierungsstellung die erste Steuerkante (70) den Anschluss B vom Entlüftungsreservoir (64) beziehungsweise Druckreservoir (54) abtrennt, und
die zweite Steuerkante (80) den Anschluss B mit dem Druckreservoir (54) beziehungsweise Entlüftungsreservoir (54) verbindet.

7. Drehdurchführung (10) nach Anspruch 5 und/oder 6, **dadurch gekennzeichnet, dass** der erste und/oder der zweite Ventilstößel (40, 42) einen Hülsenabschnitt (76) mit einem offenen freien Ende (70) und eine mit dem Hülsenabschnitt (76) verbundene, am radial äußeren Bereich vorgesehene Radialöffnung (78) aufweisen, wobei die erste Steuerkante (70) am freien Ende des Hülsenabschnitts vorgesehen ist und die zweite Steuerkante (80) die Radialöffnung (78) begrenzt.

8. Drehdurchführung (10) nach einem der Ansprüche 4 bis 7, **dadurch gekennzeichnet, dass** die Ventilstößel (40, 42) an einem Ventilkolben (44) angeordnet sind, der wenigstens einen druckbeaufschlagbaren Druckraum (46, 48) begrenzt.

9. Drehdurchführung (10) nach einem der vorhergehenden Ansprüche, **dadurch gekennzeichnet, dass** das Grundteil (12) ein Ansteueranschlusspaar (26) zur pneumatischen Ansteuerung der Ventilanordnung (36) aufweist.

10. Drehdurchführung (10) nach einem der vorhergehenden Ansprüche, **dadurch gekennzeichnet, dass** das Drehteil (14) derart ausgebildet ist, dass es 2, 4, 6, 8, 10 oder 12 Abgreifpaare (28) aufweist.

11. Verfahren, zum Betreiben einer Drehdurchführung (10), insbesondere nach einem der vorherigen Ansprüche, und zum pneumatischen Aktivieren eines von mehreren an einem Drehteil (14) der Drehdurchführung (10) vorgesehenen und dort an Abgreifpaaren (28) angeschlossenen Manipulators (34), wobei das Drehteil (14) an einem Grundteil (12) der Drehdurchführung (10) drehbar angeordnet ist, wobei die Abgreifpaare (28) jeweils einen Anschluss A und einen Anschluss B umfassen und die Anschlüsse A und B mit einem grundteilseitigen Entlüftungsanschluss (64) beziehungsweise Arbeitsanschluss (54) verbindbar sind, umfassend folgende Schritte:
- Verbinden der jeweiligen Anschlüsse A mit dem Arbeitsanschluss (54) beziehungsweise Entlüftungsanschluss (64) und die jeweiligen Anschlüsse B mit dem Entlüftungsanschluss (64) beziehungsweise Arbeitsanschluss (54),
- Verdrehen des Drehteils (14) gegenüber dem Grundteil (12) derart, dass das Anschlusspaar (28.1) des zu aktivierenden Manipulators (34) eine Aktivierungslage einnimmt, und
- Ansteuern einer am Grundteil (12) vorgesehenen Ventilanordnung (36) derart, dass bei dem Abgreifpaar (28.1) des Manipulators (34), der die Aktivierungslage einnimmt, die Anschlussbelegung der Anschlüsse A und B invertiert wird.

## Claims

1. A rotary joint (10) having a basic part (12) and a rotary part (14) that is located rotatably relative to the basic part (12), having a connection pair (20) provided on the basic part (12) and including a working connection (16) and a ventilation connection (18), and having a plurality of pickup pairs (28), provided on the rotary part (14) and each having one connection A and connection B, **characterized in that** in or on the basic part (12), a valve assembly (36) that can be switched from a deactivation position to an activation position is provided, and in the deactivation position of the valve assembly (36), the respective connections A are connected to the working connection (16) and ventilation connection (18), respectively, and the respective connections B are connected to the ventilation connection (18) and the working connection (16), respectively; and that the rotary part (14) can be rotated relative to the basic part (12) in such a way that a pickup pair (28.1) assumes an activation location, and in the activation position of the valve assembly (36), the configuration of the connections A and B in the pickup pair (28.1) that assumes the activation location is inverted.

2. The rotary joint (10) of claim 1, **characterized in that** between the basic part (12) and the rotary part (14), a first pressure reservoir (54), connected to the working connection (16), and a second ventilation reservoir (64), connected to the ventilation connection (18), are provided, and in the deactivation position of the valve assembly (36), the connections A are connected to the pressure reservoir (54) and the ventilation reservoir (64), respectively, and the connections B are connected to with the ventilation reservoir (64) and the pressure reservoir (54), respectively.

3. The rotary joint (10) of claim 2, **characterized in that** in the activation position of the valve assembly (36), the connections A and B of the pickup pair (28.1) in the activation location are disconnected from the pressure reservoir (54) and ventilation reservoir (64), and from the ventilation reservoir (64) and the pressure reservoir (54), respectively, and are connected to the ventilation reservoir (64) and the pressure reservoir (54), and the pressure reservoir (54) and the ventilation reservoir (64), respectively.

4. The rotary joint (10) of claim 1, 2 or 3, **characterized in that** the valve assembly (36) includes two valve tappets (40, 42), which can be shifted radially to the axis of rotation (38) of the rotary part (14) and that in the deactivation position are located in the basic part (12) and in the activation position at least intermittently engage tappet receptacles (74) on the rotary part side and/or a ring seal (72) provided on the tappet receptacle (74).

5. The rotary joint (10) of claim 4, **characterized in that** the first valve tappet (40) has a first control edge (70) and a second control edge (80), and when the first valve tappet (40) shifts into the activation position, the first control edge (70) disconnects the connection A from the pressure reservoir (54) or ventilation reservoir (64), respectively, and the second control edge connects the connection A to the ventilation reservoir (64) or the pressure reservoir (54), respectively.

6. The rotary joint (10) of claim 4 or 5, **characterized in that** the second valve tappet (42) has a first control edge (70) and a second control edge (80), and when the second valve tappet (42) shifts into the activation position, the first control edge (70) disconnects the connection B from the ventilation reservoir (64) or pressure reservoir (54), respectively, and the second control edge connects the connection B to the pressure reservoir (54) or the ventilation reservoir (64), respectively.

7. The rotary joint (10) of claim 5 and/or 6, **characterized in that** the first and/or the second valve tappet (40, 42) has a sheath portion with an open free end (70) and a radial opening (78), communicating with the sheath portion (76) and provided on the radially outer region, and the first control edge (70) is provided on the free end of the sheath portion, and the second control edge (80) defines the radial opening (78).

8. The rotary joint (10) of one of claims 4 through 7, **characterized in that** the valve tappets (40, 42) are located on a valve piston (44), which defines at least one pressure chamber (46, 48) that can be subjected to pressure.

9. The rotary joint (10) of one of the foregoing claims, **characterized in that** the basic part (12) has a triggering connection pair (26) for pneumatic triggering of the valve assembly (36).

10. The rotary joint (10) of one of the foregoing claims, **characterized in that** the rotary part (14) is embodied such that it has 2, 4, 6, 8, 10 or 12 pickup pairs (28).

11. A method for operating a rotary joint (10), in particular of one of the foregoing claims, and for pneumatic activation of one of a plurality of manipulators (34) provided on a rotary part (14) of the rotary joint (10) and connected there to pickup pairs (28), wherein the rotary part (14) is located rotatably on a basic part (12) of the rotary joint (10), and the pickup pairs (28) each include one connection A and one connection B, and the connections A and B are connectable to a ventilation connection (64), on the side toward the basic part, and a working connection (54), respectively, including the following steps:
- connecting the respective connections A to the working connection (54) and ventilation connection (64), respectively, and connecting the respective connections B to the ventilation connection (64) and the working connection (54), respectively,
- rotating the rotary part (14) relative to the basic part (12) in such a manner that the connection pair (28.1) of the manipulator (34) to be activated assumes an activation location, and
- triggering a valve assembly (36), provided on the basic part (12), in such a manner that in the pickup pair (28.1) of the manipulator (34) that assumes the activation location, the connection configuration of the connections A and B is inverted.

## Revendications

1. Passage tournant (10) comprenant une partie de base (12) et une partie tournante (14) agencée en rotation par rapport à la partie de base (12), une paire de raccords (20) situés sur la partie de base (12) et comportant un raccord de travail (16) et un raccord de ventilation (18), et plusieurs paires de prélèvement (28) situées sur la partie tournante (14) et présentant chacune un raccord A et un raccord B, **caractérisé en ce qu'**un ensemble soupape (36) pouvant passer d'une position de désactivation dans une position d'activation est situé dans ou sur la partie de base (12), les raccords A respectifs, dans la position de désactivation de l'ensemble soupape (36), étant reliés au raccord de travail (16) ou au raccord de ventilation (18) et les raccords B respectifs étant reliés au raccord de ventilation (18) ou au raccord de travail (14), et **en ce que** la partie tournante (14) peut être amenée en rotation par rapport à la partie de base (12), de sorte qu'une paire de prélèvement (28.1) occupe une position d'activation, sachant que dans la position d'activation de l'ensemble soupape (36), pour la paire de prélèvement (28.1) qui occupe la position d'activation, l'occupation des raccords A et B est inversée.

2. Passage tournant (10) selon la revendication 1, **caractérisé en ce qu'**un premier réservoir de pression (54) relié au raccord de travail (16) et un deuxième réservoir de ventilation (64) relié au raccord de ventilation (18) sont situés entre la partie de base (12) et la partie tournante (14), les raccords (A), dans la position de désactivation de l'ensemble soupape (36), étant reliés au réservoir de pression (54) ou au réservoir de ventilation (64) et les raccords (B) étant reliés au réservoir de ventilation (64) ou au réservoir de pression (54).

3. Passage tournant (10) selon la revendication 2, **caractérisé en ce que**, dans la position d'activation de l'ensemble soupape (36), les raccords A et B de la paire de prélèvement (28.1) située dans la position d'activation sont séparés du réservoir de pression (54) et du réservoir de ventilation (64) ou du réservoir de ventilation (64) et du réservoir de pression (54), et sont reliés au réservoir de ventilation (64) et au réservoir de pression (54), ou au réservoir de pression (54) et au réservoir de ventilation (64).

4. Passage tournant (10) selon la revendication 1, 2 ou 3, **caractérisé en ce que** l'ensemble soupape (36) comprend deux poussoirs de soupape (40, 42) pouvant être déplacés radialement par rapport à l'axe de rotation (38) de la partie tournante (14), et qui, dans la position de désactivation, se situent dans la partie de base (12) et qui, dans la position d'activation, s'insèrent au moins en partie dans des logements de poussoir (74) côté partie tournante et/ou dans un joint annulaire (72) situé sur le logement de poussoir (74).

5. Passage tournant (10) selon la revendication 4, **caractérisé en ce que** le premier poussoir de soupape (40) comprend un premier bord de commande (70) et un deuxième bord de commande (80), le premier bord de commande (70), lorsque le premier poussoir de soupape (40) se déplace dans la position d'activation, séparant le raccord A du réservoir de pression (54) ou du réservoir de ventilation (64), et
le deuxième bord de commande reliant le raccord A au réservoir de ventilation (64) ou au réservoir de pression (54).

6. Passage tournant (10) selon la revendication 4 ou 5, **caractérisé en ce que** le deuxième poussoir de soupape (42) comprend un premier bord de commande (70) et un deuxième bord de commande (80), le premier bord de commande (70), lorsque le deuxième poussoir de soupape (42) se déplace dans la position d'activation, séparant le raccord B du réservoir de ventilation (64) ou du réservoir de pression (54), et le deuxième bord de commande (80) reliant le raccord B au réservoir de pression (54) ou au réservoir de ventilation (54).

7. Passage tournant (10) selon la revendication 5 et/ou 6, **caractérisé en ce que** le premier et/ou le deuxième poussoir de soupape (40, 42) comprennent une partie manchon (76) pourvue d'une extrémité libre ouverte (70) et une ouverture radiale (78) reliée à la partie manchon (76) située sur la zone radialement extérieure, le premier bord de commande (70) étant situé sur l'extrémité libre de la partie manchon et le deuxième bord de commande (80) délimitant l'ouverture radiale (78).

8. Passage tournant (10) selon l'une quelconque des revendications 4 à 7, **caractérisé en ce que** les poussoirs de soupape (40, 42) sont agencés sur un piston de soupape (44) qui délimite au moins une chambre de pression (46, 48) pouvant être sollicitée en pression.

9. Passage tournant (10) selon l'une quelconque des revendications précédentes, **caractérisé en ce que** la partie de base (12) comprend une paire de raccords de commande (26) permettant la commande pneumatique de l'ensemble soupape (36).

10. Passage tournant (10) selon l'une quelconque des revendications précédentes, **caractérisé en ce que** la partie tournante (14) est réalisée de telle manière qu'elle comprend 2, 4, 6, 8, 10 ou 12 paires de prélèvement (28).

11. Procédé permettant de faire fonctionner un passage tournant (10), en particulier selon l'une quelconque des revendications précédentes, et/ou permettant l'activation pneumatique d'un manipulateur (34) parmi plusieurs manipulateurs situé sur une partie tournante (14) du passage tournant (10) et raccordé à cet endroit aux paires de prélèvement (28), la partie tournante (14) étant agencée en rotation sur une partie de base (12) du passage tournant (10), les paires de prélèvement (28) comprenant chacune un raccord A et un raccord B et les raccords A et B pouvant être reliés à un raccord de ventilation (64) ou à un raccord de travail (54) côté partie de base, le procédé comprenant les étapes suivantes consistant à :
- relier les raccords A respectifs au raccord de travail (54) ou au raccord de ventilation (64) et les raccords B respectifs au raccord de ventilation (64) ou au raccord de travail (54),
- amener en rotation la partie tournante (14) par rapport à la partie de base (12), de telle sorte que la paire de raccords (28.1) du manipulateur (34) à activer occupe une position d'activation, et
- commander un ensemble soupape (36) situé sur la partie de base (12), de telle sorte que, pour la paire de prélèvement (28.1) du manipulateur (34) qui occupe la position d'activation, l'occupation des raccords A et B est inversée.
